Europäisches Patentamt

European Patent Office

Office européen des brevets

(11) Publication number: **0 184 404**
**B1**

(12) **EUROPEAN PATENT SPECIFICATION**

(45) Date of publication of patent specification: **27.07.88**

(51) Int. Cl.⁴: **F 16 L 3/20**

(21) Application number: **85308732.8**

(22) Date of filing: **02.12.85**

(54) **Spring support device.**

<table>
<tr><td>

(30) Priority: **04.12.84 GB 8430562**

(43) Date of publication of application:
**11.06.86 Bulletin 86/24**

(45) Publication of the grant of the patent:
**27.07.88 Bulletin 88/30**

(84) Designated Contracting States:
**AT BE CH DE FR IT LI LU NL SE**

(56) References cited:
**DE-A-2 128 796**
**DE-U-1 751 041**
**US-A-2 978 217**
**US-A-4 176 815**

</td><td>

(73) Proprietor: **Carpenter and Paterson Ltd.**
**Crown Works**
**Welshpool Powys, SY21 7BQ Wales (GB)**

(72) Inventor: **Lee, John Sydney**
**Fron Llwyd Welshpool**
**Powys, SY21 9PG Wales (GB)**

(74) Representative: **Lomas, Geoffrey Michael et al**
**BARKER, BRETTELL & DUNCAN 138 Hagley**
**Road Edgbaston**
**Birmingham B16 9PW (GB)**

</td></tr>
</table>

Courier Press, Leamington Spa, England.

## Description

This invention relates to a spring support device for resiliently supporting a pipe, cable, or the like.

Typically, a known support device for pipes comprises a tubular body of steel having opposed end plates which provides a housing for a load-carrying spring unit. Examples of support devices of this kind are shown in British patent Specifications, 991684 and 1329076. Such devices will hereinafter be referred to as devices of the kind defined.

In order to ensure that a device of this kind is corrosion resistant the body and end plates are first galvanised and the end plates are then welded to the body following assembly of a spring unit. Since, use, the end plates are under stress it is important that the welded seems are of high quality.

Difficulty has been experienced in obtaining high quality welded seams on component that have been previously galvanised. Moreover, after welding it is necessary to treat the joint with "Galvafroid" (Trade Mark of Expandite Ltd.) or some similar material.

It is an object of the present invention to overcome the problem mentioned above and to simplify the method of manufacture and assembly of support devices of the kind defined.

We are aware that US-A-2 978 217 discloses a vehicle hose line support having a tubular housing for a coil spring in which portions of the walls are pierced to form abutments for end plates.

According to this invention a spring support device for resiliently supporting a pipe, cable, or the like comprises a tubular metal body having first and second ends, first and second opposed end plates housed within the body respectively adjacent to said first and second ends, a load carrying spring unit housed within said body between said end plates, said body being provided with a plurality of circumferentially spaced abutments integrally connected to said tubular body adjacent to said first end and projecting radially inwardly of said body for engagement by said first end plate for axially locating said first end plate in said body against axially outward movement relative to said body, characterised in that said first end plate is provided in its outer edge with a series of circumferentially spaced cut-outs corresponding to said abutments for permitting assembly of said first plate into said body by aligning said abutments and cut-outs and moving said first plate axially past said abutments.

Preferably, the body is cylindrical but may be of square or other section. The body is preferably of steel but other metals may be found suitable.

A further series of circumferentially spaced abutments may be provided adjacent to the second end of the body for engagement by the second plate which is similarly provided in its outer edge with a series of circumferentially spaced cut-outs.

Each abutment may comprise a portion of the tubular body which has been deformed radially inwardly of the body.

Preferably, the body portion has a generally axially inwardly facing free edge for engagement by an end plate.

The body portion is preferably formed by partially severing a portion of the body wall and bending said portion inwardly to provide a portion which is substantially S-shaped in axial cross-section.

A second aspect of the invention is concerned with a method of forming a spring support device body for a spring support device of the kind defined comprising the steps of taking a length of metal tube and punching circumferentially spaced portions of the tube adjacent to at least a first end thereof so as to produce radially inward protruding projections adjacent to the first end to provide circumferentially spaced abutments integrally connected to the body for locating at least one end plate and further providing a series of spaced cut-outs in said one end plate.

Preferably, the method comprises the step of forming the abutment by piercing the tube during a punching operation so that each projection has an axially inwardly facing free edge.

The body can be galvanised subsequent to the punching step.

Where the device is to be used for supporting loads acting vertically it may assist assembly if at least the upper end plate is provided with additional means of location. The additional means may be a pin or screw extending through the body wall into an adjacent edge portion of the end plate.

An embodiment of the invention will now be described by way of example only with reference to the accompanying drawings in which:

Figure 1 is a side elevation of a variable spring support device according to this invention as viewed along arrow 'A' of Figure 2;

Figure 2 is a plan view of the device of Figure 1;

Figure 3 is a cross-section on the line III-III of Figure 2; and

Figure 4 is an enlarged detail of Figure 3.

The drawings show a variable load support device 1 incorporating a scale 2 for indicating the value of the load supported or the deflection under load. The support device is designed as a pipe or cable hanger and is intended to be mounted for supporting variable loads acting in a substantially vertical direction. The support 1 comprises a steel, tubular body 3 of round section which is closed at the top by a circular end plate 4 and provided at the bottom with an annular end plate or ring 5 having a central aperture 15 which allows a turnbuckle 7 to pass through the ring. A load carrying coil spring 6 is mounted on the ring 5 within the body 3 and supports the turnbuckle 7 which is adjustably connected by a screw threaded rod 16 to a circular load bearing plate 8 which rests freely on the upper end of the spring 6 between the top end plate 4 and the bottom end plate 5.

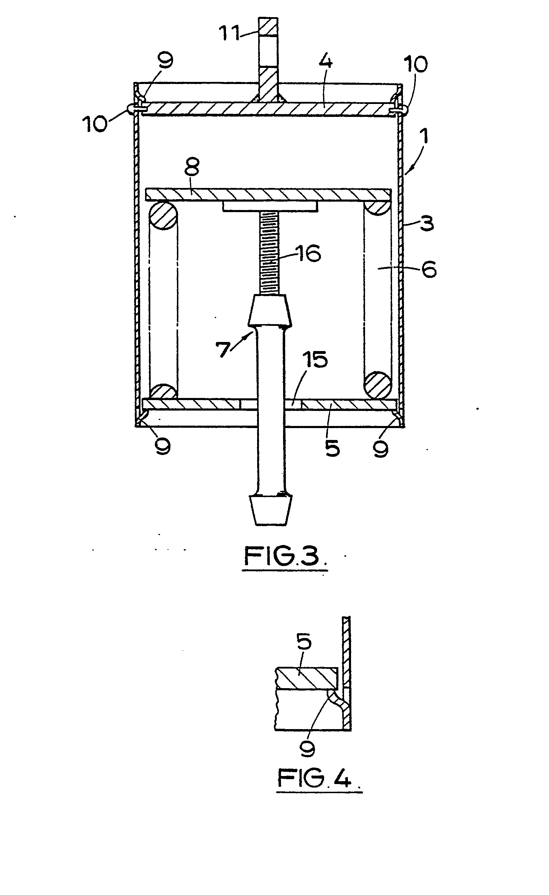

The bottom end plate 5 is a loose fit within the body 3 and rests freely on four abutments 9 equi-spaced around the inside face of the body wall adjacent to the bottom end thereof. Similarly, the top end plate 4 is a loose fit in the body 3 and engages four equi-spaced abutments 9 adjacent to the upper end thereof. Optionally, the top end plate 4 maybe held in position by several pins 10 extending through the body wall into holes in adjacent edge positions of the top end plate. The equi-spaced abutments 9 are formed integrally with the body wall by punching flutes from the outside so that strong load bearing edge portions are formed internally which face axially inwards towards each other. As shown in Figure 4, the flutes are of substantially S-shaped in axial cross-section.

In this example the top end plate 4 carries a rectangular lug 11 for connecting the device 1 to a rigid support structure but any other suitable form of connection may be employed. A slot 12 is provided in the wall of the body for an adjustable stop 13 for the plate 8 which enables the load to be pre-set. The load on the spring 6 is indicated by the position of the plate 8 relative to the external scale 2.

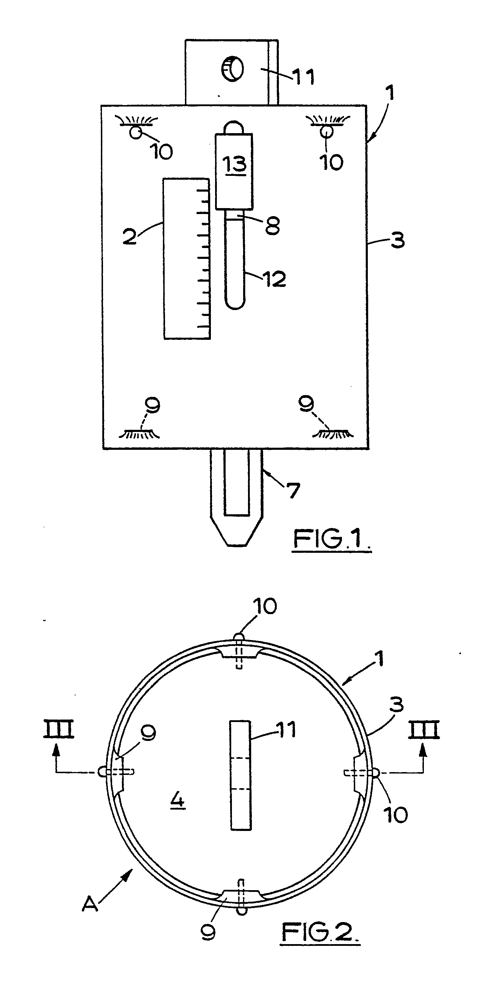

An important feature of this invention is the simplification of manufacture and assembly of support devices of the kind defined and it will be appreciated from the foregoing description and the drawings that each of the component parts of the device may be galvanised separately, or otherwise coated, before assembly to resist corrosion. The device may then be assembled for use by inserting into the tubular body 3 firstly the bottom plate 5, which is manipulated edgewise past the abutments 9 to rest on the axially directed free edges thereof at the bottom end of the body 3, then the spring 6 and the load bearing plate 8 are inserted and finally the top plate 4 is manipulated edgewise past the spaced abutments 9. The top plate 4 maybe additionally located by the pins 10 to prevent it from dropping when the device is not under load but it has been found in practice that this is not strictly necessary. The lower end portion of the turnbuckle 7 extends through the central aperture 15 in the bottom plate and is connected to the pipe (not shown) to be supported. It can be screwed vertically on the rod 16 for adjusting the support relative to the pipe. When the support 1 is under load the top and bottom end plates 4, 5 as well as the load bearing plate 8 are all firmly held in the positions shown in Figure 2.

Cut-outs are provided in the edges of the end plates 4, 5 to facilitate manipulation past the abutments 9 during assembly by aligning the abutments and cut-outs and moving the plates axially past the abutments.

With the arrangement provided by this invention there is no need for any welding operations to secure the top and bottom plates, which are analogous to the fixed end plates of the prior art devices, to the housing 3 and therefore no need to treat the welded parts with "Galvafroid" or similar anti-corrosion material. Moreover, there is a saving of time and hence costs in manufacture whilst providing strong integral abutment faces for supporting vertical loads.

It will be appreciated that the size of the device and its load bearing capacity may be varied and minor modifications such as the type of lug connection 11 and the number of abutments 9 may be changed accordingly without departing from the scope of the invention.

It is to be understood that the invention may be adapted for use in spring support devices wherein the loads act in a substantially horizontal direction.

**Claims**

1. A spring support device (1) for resiliently supporting a pipe, cable, or the like comprising a tubular metal body (3) having first and second ends, first and second opposed end plates (4, 5) housed within the body (3) respectively adjacent to said first and second ends, a load-carrying spring unit (6) housed within said body (1) between said end plates (4, 5), said body being provided with a plurality of circumferentially spaced abutments (9) integrally connected to said tubular body (3) adjacent to said first end and projecting radially inwardly of said body (3) for engagement by said first end plate (4) for axially locating said first end plate (4) in said body (3) against axially outward movement relative to said body (3), characterised in that said first end plate (4) is provided in its outer edge with a series of circumferentially spaced cut-outs corresponding to said abutments (9) for permitting assembly of said first plate (4) into said body (3) by aligning said abutments (9) and cut-outs and moving said first plate (4) axially past said abutments (9).

2. A spring support device as claimed in claim 1 in which each of said abutments (9) comprises a portion of said tubular body (3) which has been deformed radially inwardly of said body (3).

3. A spring support device as claimed in claim 2 in which said body portion has a generally axially inwardly facing free edge for engagement by said first end plate (4).

4. A spring support device (1) as claimed in claim 3 in which said body portion is of substantially S-shape in axial cross-section.

5. A spring support device (1) as claimed in any preceding claim in which a further series of circumferentially spaced abutments (9) integrally connected to said body (3) is provided adjacent to said second end of said body (3) for engagement by said second plate (5) which is similarly provided in its outer edge with a series of circumferentially spaced cut-outs.

6. A method of forming a spring support device body as claimed in claim 1 comprising the steps of taking a length of metal tube (3) and punching circumferentially spaced portions of said tube adjacent to a first end thereof so as to produce radially inwardly protruding projections (9) adjacent to said end and providing a series of circumferentially spaced cut-outs in at least said first plate.

7. The method as claimed in claim 6 in which said step comprises piercing said tube (3) during punching such that each projection has an axially inwardly facing free edge.

8. The method as claimed in claim 6 or claim 7 comprising the step of galvanising the body (3) following said punching step.

## Patentansprüche

1. Federhänger (1) zum nachgiebigen Aufhängen eines Rohrs, eines Kabels oder dergleichen, mit einem rohrförmigen Metallkörper (3) mit einem ersten und einem zweiten Ende, mit ersten und zweiten einander gegenüberliegenden Endscheiben (4, 5), die in den Körper (3) in der Nähe des ersten bzw. zweiten Endes untergebracht sind, mit einer lasttragenden Federeinheit (6), die in dem Körper (3) zwischen den Endscheiben (4, 5) angeordnet ist, wobei der Körper mehrere in Umfangsrichtung Abstand voneinander aufweisende Anschläge (9) aufweist, die mit dem rohrförmigen Körper nahe dem ersten Ende einstückig verbunden sind, die von dem Körper (3) radial nach innen vorstehen, an denen die erste Endscheibe (4) angreift und die die erste Endscheibe (4) in dem Körper (3) gegen eine axial nach außen gerichtete Bewegung relativ zu dem Körper (3) axial festlegen, dadurch gekennzeichnet, daß die erste Endscheibe (4) in ihrem äußeren Rand eine Reihe von in Umfangsrichtung Abstand voneinander aufweisenden, den Anschlägen (9) entsprechenden Ausschnitten aufweist, so daß die erste Endscheibe (4) in den Körper (3) eingeführt werden kann, indem die Anschläge (9) und die Ausschnitte zur Deckung gebracht werden und die erste Endscheibe (4) axial bis hinter die Anschläge (9) bewegt wird.

2. Federhänger nach Anspruch 1, bei welchem jeder Anschlag (9) einen Teil des rohrförmigen Körpers (3) umfaßt, der radial nach innerhalb des Körpers (3) deformiert worden ist.

3. Federhänger nach Anspruch 2, bei welchem der Teil des Körpers eine im wesentlichen axial nach innen gerichtete freie Kante umfaßt, an der die erste Endscheibe (4) zum Angriff kommt.

4. Federhänger (1) nach Anspruch 3, in welchem der Teil des Körpers im Axialschnitt im wesentlichen S-Form aufweist.

5. Federhänger (1) nach einem der vorangehenden Ansprüche, bei welchem eine weitere Reihe von in Umfangsrichtung Abstand voneinander aufweisenden Anschlägen (9) einstückig mit dem Körper (3) nahe dem zweiten Ende des Körpers (3) vorgesehen ist, an welchen die zweite Scheibe (5) angreift, die in ähnlicher Weise in ihrem äußeren Rand mit einer Reihe von in Umfangsrichtung Abstand voneinander aufweisenden Ausschnitten versehen ist.

6. Verfahren zur Herstellung des Körpers eines Federhängers nach Anspruch 1, umfassend die Verfahrensschritte, daß an einem Metallrohrabschnitt (3) einem ersten Ende desselben benachbarte, in Umfangsrichtung Abstand voneinander aufweisende Teile des Rohrs durchgeprägt werden, um nahe diesem Ende radial nach innen vorstehende Vorsprünge (9) zu schaffen und daß eine Reihe von in Umfangsrichtung Abstand voneinander aufweisenden Ausschnitten zumindest in der ersten Scheibe geschaffen werden.

7. Verfahren nach Anspruch 6, bei welchem der besagte Verfahrensschritt das Durchtrennen des Rohres (3) beim Durchprägen umfaßt, so daß jeder Vorsprung eine axial nach innen weisende freie Kante aufweist.

8. Verfahren nach Anspruch 6 oder 7, welches den Verfahrensschritt des Galvanisierens des Körpers (3) im Anschluß an den Durchprägeschritt.

## Revendications

1. Dispositif de support à ressort (1) destiné à supporter élastiquement un tuyau, un câble ou analogue et comportant un corps métallique tubulaire (3) possédant des première et seconde extrémités, des première et seconde plaques d'extrémité opposées (4, 5) logées à l'intérieur du corps (3) respectivement au voisinage desdites première et seconde extrémités, une unité (6) en forme de ressort portant une charge et logée à l'intérieur dudit corps (1) entre lesdites plaques d'extrémité (4, 5) ledit corps comportant une pluralité de butées (9) espacées circonférentiellement et raccordées d'un seul tenant audit corps tubulaire (3) au voisinage de ladite première extrémité et faisant saillie radialement vers l'intérieur dudit corps (3) de manière que ladite première plaque d'extrémité (4) vienne s'y appliquer afin d'être positionnée axialement dans ledit corps (3) en étant bloquée contre tout déplacement axial vers l'extérieur par rapport à ce corps (3), caractérisé en ce que ladite première plaque d'extrémité (4) comporte, dans son bord extérieur, une série de découpes espacées circonférentiellement et correspondant auxdites butées (9) pour permettre le montage de ladite première plaque (4) dans ledit corps (3) moyennant un alignement desdites butées (9) et desdites découpes et un déplacement axial de ladite première plaque (4) amenant cette dernière au-delà desdites butées (9).

2. Dispositif de support à ressort selon la revendication 1, dans lequel chacune des butées (9) comporte une partie dudit corps tubulaire (3), qui a été déformée radialement vers l'intérieur dudit corps (3).

3. Dispositif de support à ressort selon la revendication 2, dans lequel ladite partie du corps possède un bord libre dirigé d'une manière générale axialement vers l'intérieur et contre lequel ladite première plaque d'extrémité (4) vient s'appliquer.

4. Dispositif de support à ressort (1) selon la revendication 3, dans lequel ladite partie du corps possède une coupe transversale axiale sensiblement en forme de S.

5. Dispositif de support à ressort (1) selon l'une quelconque des revendications précédentes, dans lequel une autre série de butées (9) espacées circonférentiellement est raccordée d'un seul tenant audit corps (3) et est prévue au voisinage de ladite seconde extrémité dudit corps (3) de manière que sur ces butées vienne s'appliquer ladite seconde plaque (5), dont le bord extérieur comporte de façon similaire une série de découpes espacées circonférentiellement.

6. Procédé pour former un corps d'un dispositif de support à ressort selon la revendication 1, incluant les étapes consistant à prendre une longueur d'un tube métallique (3) et à découper des parties espacées circonférentiellement dudit tube au voisinage d'une première extrémité de ce dernier de manière à former des parties (9) qui font saillie radialement vers l'intérieur, au voisinage de ladite extrémité, et à former une série de découpes espacées circonférentiellement, dans au moins ladite première plaque.

7. Procédé selon la revendication 6, selon lequel ladite étape inclut le perçage dudit tube (3) pendant le poinçonnage de sorte que chaque partie saillante possède un bord libre dirigé axialement vers l'intérieur.

8. Procédé selon la revendication 6 ou 7, incluant l'étape consistant à galvaniser le corps (3) à la suite de ladite étape de poinçonnage.

0 184 404

FIG.1.

FIG.2.

1

FIG.3.

FIG.4.